# EUROPEAN PATENT SPECIFICATION

(11) **EP 3 401 240 B1**
(45) Date of publication and mention of the grant of the patent: **14.10.2020**
(21) Application number: 18171701.8
(22) Date of filing: 10.05.2018
(51) Int. Cl.: B65G 1/02

(54) **RACK SYSTEM**
REGALSYSTEM
SYSTÈME DE CRÉMAILLÈRE

(30) Priority: 10.05.2017 GB 201707515
(43) Date of publication of application: 14.11.2018
(73) Proprietor: Rack Collapse Prevention Limited, Redditch, West Midlands B98 9DB (GB)
(72) Inventor: ATTWELL, Craig, Redditch, West Midlands B98 9DB (GB)
(74) Representative: Barker Brettell LLP

(56) References cited:
- GB-A- 2 542 193
- US-A- 4 981 225
- Sun West Engineering ET AL: "Seismic Rated Zone-4 Brace Kit", , 15 February 2016 (2016-02-15), pages 1-2, XP055513058, Phoenix, Arizona, USA Retrieved from the Internet: URL:http://www.sunwesteng.com/documents/pr oducts/seismic-rated-zone-4-brace-kit-s061 539.pdf [retrieved on 2018-10-05]

## Description

### Field of the Invention

The invention relates to a warehouse rack system having an auxiliary support system to prevent structural failure.

### Background

Rack systems are commonly used in warehouses to store large numbers of products within a minimal floor space, and may commonly contain products in palletised form. Such racks comprise vertical supports holding a number of shelves, and can reach heights of 6m or more.

With any type of racking there is a risk that the rack will collapse, the risk of collapse being greater as the height increases. Incorrect stacking of pallets, and collisions with forklifts, are two common causes of rack collapse.

If, for example, a support leg on the rack assembly is damaged whilst under load, for example by an impact with a forklift, the downward pressure from pallets on the rack shelving may force the leg to buckle. The rack may then lose localised structural support, causing a knock-on effect on other support legs and collapse of the rack assembly. In warehouses, racks are often arranged in closely packed rows. If one rack collapses it may hit another rack, causing other racks to collapse, potentially resulting in a domino effect collapsing many racks. Such collapses cause a large loss of stock, and pose a serious and potentially fatal risk to workers in the warehouse.

Typical safety systems are installed in an attempt to prevent racks from being damaged. For example, barriers are commonly installed around the legs of racks to shield the legs from impacts with forklifts. However, such techniques do not prevent all collisions. A heavy forklift operated at speed may overcome the barrier, for example, and hit a leg of the rack. If such a collision occurs, it is likely that the rack will still collapse.

US 4,981,225 discloses a warehouse rack system as stated in the preamble of claim 1 and a method of providing auxiliary support for a warehouse rack system as stated in the preamble of claim 14, it discloses a universal safety net system for a pallet rack, employing extension members which are variably adjustable for extending the effective height of the pallet rack support posts, and offset members including a series of openings for implementing a pre-established offset spacing from the pallet rack, cables being suspended between the offset members and/or extension members to provide a cable framework for supporting the safety nct.

A publication of Sun West Engineering et al "Seismic Rated Zone-4 Brace Kit" discloses a kit of parts for an auxiliary rack support system according to the preamble of claim 13.

### Summary of the Invention

In accordance with a first aspect of the invention, there is provided a warehouse rack system comprising:
a floor-mounted rack assembly comprising a plurality of vertical legs supporting a plurality of shelves; and
an auxiliary rack support system comprising a plurality of leg support cables, each leg support cable having a first end attached to a load bearing structure above the rack assembly and a second end attached to one of the plurality of vertical legs;
wherein the plurality of leg support cables is configured to bear the weight of the rack assembly only in the event of structural failure of one or more of the vertical legs. The second end of each leg support cable is attached such that the leg support cable is slack in normal use, i.e. when the legs of the rack assembly are not damaged and carry the full weight of shelves and any items thereon.

The auxiliary rack support system acts as a back-up in case of failure of one or more of the legs of the rack assembly. If a leg buckles, for example after a collision with a forklift, the weight of the rack assembly that would otherwise be carried by that leg can instead be carried by the auxiliary rack support system. The auxiliary rack support system thus prevents a damaged rack from tipping and/or collapsing, avoiding loss of stock and danger for warehouse operators.

In normal use the leg support cables may bear none of the weight of the rack. In some cases the leg support cables may be tensioned to a small degree, for example less than 100N, so that the cables are able to support the rack assembly in the event of failure with a minimum of movement of the rack assembly as the cables are further tensioned to support the additional load.

The auxiliary rack support system may comprise a main support cable suspended from, and extending horizontally across, the load bearing structure, the first end of each leg support cable being attached to the main support cable. The main support cable may for example be suspended between adjacent support bars or beams of the load bearing structure. If the leg support cables are attached directly to the load bearing structure, the position of the racks may be limited by the position of the load bearing beams of the load bearing structure. Connecting the leg support cables instead to a main support cable may remove this limitation, providing more freedom in the arrangement of the racks in the warehouse.

The rack support system may comprise a sensor system configured to determine whether one of the vertical legs of the rack assembly has failed. The sensor system may be configured to determine if one of the vertical legs has failed by detecting an increase in tension applied to any one of the leg support cables. The sensor system may for example comprise a load sensor arranged to detect a tension in one or more of the leg support cables, or the main support cable if used. The sensor system may comprise a plurality of sensor cables attached to a respective plurality of the vertical legs, wherein the load sensor is configured to detect a tension in one or more of the sensor cables. The sensor system may alternatively comprise a sensor arranged to measure a distance between one of the vertical legs and a fixed point relative to the rack assembly, such as the floor or ceiling of the warehouse. The sensor system may be configured to provide a notification in the event that the distance changes by more than a predetermined amount. The sensor may be configured to measure the distance using reflection of a light beam from the fixed point. If the predetermined amount is set to a few centimetres, for example between 1 and 10 cm, the sensor can avoid being triggered by normal movement of the rack assembly during loading and unloading of items on the shelves.

The sensor system may comprise an alarm arranged to be activated if the sensor system determines that one of the legs of the rack assembly has failed, for example by detecting if a tension in one or more of the support cables has exceeded a predetermined amount or if one or more of the legs has moved by more than a predetermined amount relative to a fixed point.

In a large warehouse containing many racks, a damaged leg on a rack may easily go unnoticed, especially as the rack support system prevents tipping or collapse of the rack. The sensor system senses when a leg has failed, allowing damage to the rack assembly to be identified and repaired. The sensor system may identify an individual leg or rack that has failed, identify a row in which a leg has failed, or determine generally that a leg in the warehouse has failed.

In examples where a load sensor is attached to each leg support cable to determine if a tension is applied to that leg support cable, an individual failed leg may be identified. Alternatively, for example in embodiments where the leg support cables are attached to a main support cable, the load sensor may be attached to the main support cable and may be operable to determine if a tension has been applied to the main support cable, indicating that one or more of the leg support cables is taking an increased tension.

In examples where the sensor system comprises a plurality of sensor cables, each sensor cable may be connected to a main sensor cable, following the configuration of the leg support cables and main support cable. The main sensor cable may be suspended from the load bearing structure or from the roof of the warehouse, and may be attached using pulley wheels to allow free movement of the main sensor cable. The main sensor cable may be attached to the load sensor, such that the load sensor is operable to determine if a force has been applied to the main cable. If a force has been applied, the sensor system may determine that one of the legs has failed. The sensor cables and main sensor cable may comprise steel wire having a diameter between 1mm and 3mm, and preferably 2mm.

The auxiliary rack support system may further comprise a plurality of attachment plates, wherein the second end of each of the plurality of leg support cables is fastened to a respective one of the plurality of attachment plates, and wherein each attachment plate is attached to a respective leg of the rack assembly. The attachment plates may for example be bolted onto respective legs of the rack assembly. The attachment plates may each comprise a hook received in a corresponding hole on a leg of the rack assembly to attach each attachment plate to the leg.

The load bearing structure may be a roof of a warehouse housing the rack system. Alternatively, the load bearing structure may be a support frame provided around the rack assembly. A support frame may be used when the warehouse roof does not comprise support beams strong enough to bear the weight of the rack assembly.

The leg support cables may typically be steel cables, each cable typically having a diameter in the region of between 8mm and 12mm, depending on the expected load to be taken by each cable. The leg support cables may have a load carrying capacity of for example between around 8 and 12 tonnes (8,000 to 12,000 kg).

In embodiments wherein the leg support cables are attached to a main cable, the main support cable may be a steel cable, typically having a diameter greater than that of each leg support cable.

According to a second aspect of the invention there is provided a kit of parts for an auxiliary rack support system for a floor-mounted rack assembly, the kit of parts comprising:
a plurality of leg support cables, each leg support cable having a first end attachable to a load bearing structure and a second end attachable to one of a plurality of vertical legs of the rack assembly; and
a sensor system configured to determine whether one of the legs of the rack assembly has failed,
wherein the leg support cables are configured to bear the weight of the rack assembly in the event of structural failure of one of the vertical legs. The sensor system is configured to determine if one of the vertical legs has failed by detecting an increase in tension applied to any one of the leg support cables.

The sensor system may comprise a load sensor and a sensor cable attachable to a plurality of legs of a rack, wherein the load sensor is configured to detect a force applied to the sensor cable. The sensor system may alternatively comprise a sensor arranged to measure a distance between one of the vertical legs and a fixed point relative to the rack assembly, the sensor system configured to provide a notification in the event that the distance changes by more than a predetermined amount. The sensor may be configured to measure the distance using reflection of a light beam from the fixed point.

Any embodiment of the support system or sensor system of the first aspect of the invention may be incorporated into the kit of the second aspect of the invention.

In accordance with a third aspect of the invention, there is provided a method of providing auxiliary support for a warehouse rack system comprising a floor-mounted rack assembly having a plurality of vertical legs supporting a plurality of shelves, the method comprising:
attaching a first end of each of a plurality of leg support cables to a respective vertical leg of the rack assembly; and
attaching a second end of each of the plurality of leg support cables to a load bearing structure,
wherein the plurality of leg support cables is configured to bear the weight of the rack assembly only in the event of structural failure of one or more of the vertical legs.

The second end of each leg support cable is attached such that the leg support cable is slack in normal use.

The method may comprise suspending a main support cable from the load bearing structure, the first end of each leg support cable being attached to the main support cable.

The method may comprise attaching a sensor system configured to determine whether one of the vertical legs of the rack assembly has failed. The sensor system may be configured to determine if one of the vertical legs has failed by detecting an increase in tension applied to any one of the leg support cables. The sensor system may comprise a load sensor arranged to detect a tension in one or more of the leg support cables. The sensor system may further comprise a sensor cable attached to a plurality of the vertical legs, wherein the load sensor is configured to detect a tension in the sensor cable.

The sensor system may comprise a sensor arranged to measure a distance between one of the vertical legs and a fixed point relative to the rack assembly, the sensor system configured to provide a notification in the event that the distance changes by more than a predetermined amount. The sensor may be configured to measure the distance using reflection of a light beam from the fixed point.

The sensor system may comprise an alarm arranged to be activated if the sensor system determines that one of the legs of the rack assembly has failed.

The method may comprise attaching a plurality of attachment plates, wherein the second end of each of the plurality of leg support cables is fastened to a respective one of the plurality of attachment plates, and wherein each attachment plate is attached to a respective leg of the rack assembly. The attachment plates may be bolted onto respective legs of the rack assembly, or alternatively may each comprise a hook received in a corresponding hole on a leg of the rack assembly to attach each attachment plate to the leg.

The load bearing structure may be a roof of a warehouse housing the rack system, or may be a support frame around the rack assembly.

### Detailed Description

The invention is described in further detail below by way of example and with reference to the accompanying drawings, in which:
figure 1 is a schematic side elevation view of an example warehouse rack system;
figure 2 is a schematic end elevation view of an alternative example warehouse rack system;
figure 3 is a schematic side elevation view of an example sensor system;
figure 4 is a schematic end elevation view of an alternative example sensor system;
figures 5A and 5B show an example attachment plate; and
figures 6A and 6B show an alternative example attachment plate.

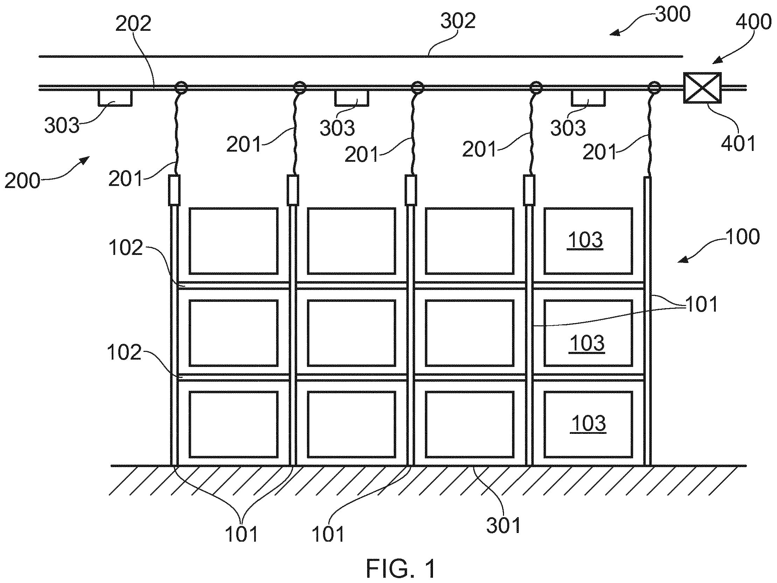

Figure 1 shows an example of a warehouse rack system comprising a rack assembly 100 and an auxiliary rack support system 200. The rack system 100 is shown within a warehouse 300, the roof 302 of which is shown in figure 1.

The rack assembly 100 comprises a plurality of legs 101 extending vertically for the full height of the rack assembly 100. The legs 101 support a plurality of shelves 102, which can be used to store goods, for example in palletised form. In the illustrated example, rack assembly 100 is a pallet rack, and shelves 102 can store pallets 103, on which goods are stacked. In normal use, the rack 100 is self-supporting: the legs 101 rest on the floor 301 of warehouse 300, and support the full weight of the rack 100 and any goods stored on its shelves 102.

The rack support system 200 is attached to the rack assembly 100, and provides back-up support in the event that the legs 101 can no longer bear the weight of the rack 100, for example because of a collision with a forklift. Rack support system 200 comprises a plurality of leg support cables 201, each attached at a first end to a respective leg 101 of the rack 100. The leg support cables are preferably attached to a top section of a leg 101, above the highest shelf 102.

In the illustrated example, the leg support cables 201 are attached at a second end to a main support cable 202. The main support cable 202 is suspended from existing support beams 303 that support the roof 302 of the warehouse 300. The support beams 303 act as a load bearing frame for the rack support system 200. The main support cable 202 is attached such that it is held taut.

In normal use, the leg support cables 201 are arranged such that they are just slack, or under low tension. For example, the length of the leg support cables may be only slightly longer (e.g. 0.5-2% or 1%-5% longer) than the distance between a leg 101 and the main support cable 202. The weight of the rack 100 is, in normal use, supported by the legs 100, not the leg support cables 201. However, if a leg 101 should buckle or fail, the leg 101 may no longer be able to bear the weight of the rack 100. In this case, the weight of the rack 100 pulls the leg support cable 201 associated with the failed leg 101 taut. The leg support cable 201 bears the weight of the rack 100, in place of the failed leg 101 to which the cable 201 is attached. The weight of the rack 100 thus continues to be supported, preventing tipping and collapse of the rack 100.

As shown in figure 1, the rack system 100 may further comprise a sensor system 400. The sensor system 400 comprises a load sensor 401 connected to the main support cable 202 of the rack support system 200. The load sensor 401 is operable to detect a force applied on the main support cable 202. If a leg 101 fails, so that at least some of the weight of the rack assembly 100 is carried by the rack support system 200, a tension will be applied to the main support cable 202 via the respective leg support cable 201. The load sensor 401 may detect this force. If the load sensor 401 detects a force on the main support cable 201, the sensor system 400 may determine that one of the legs 101 has failed, and may alert warehouse operators to the failure. For example, sensor system 400 may comprise an alarm that is sounded when a leg failure has been detected.

The rack assembly 100 may comprise additional racks 100 and support systems 200. For example, a plurality of racks 100 may be arranged in rows throughout the warehouse 300. A single support system 200 may be associated with each row of racks 100. In particular, a main support cable 202 may be suspended above each row of racks 100, and each rack 100 in the row may be connected to the main support cable 202 via leg support cables 201. A load sensor 401 of the sensor system 400 may be connected to each main support cable 202 in the warehouse 300, so that the sensor system is configured to identify a row of racks 100 in which a leg 101 has failed.

The main support cable 202 and leg support cables 201 must be strong enough to bear the weight of the rack 100. The cables 201, 202 may comprise steel rope. In particular, the diameter of the leg support cables may be between 8mm and 12mm; and the diameter of the main support cable may be similar or greater. These thicknesses of steel rope provide sufficient support for a typical loaded warehouse rack 101, with a load carrying capacity preferably of several tonnes. The cables may be coloured to enable easy identification.

In figure 1, the rack support system 200 is supported by the warehouse 300 itself. However, the warehouse 300 may in some cases not have a roof that is sufficiently strong to bear the weight of rack assembly 100. In this case, an additional load bearing frame may be required to support the rack support system.

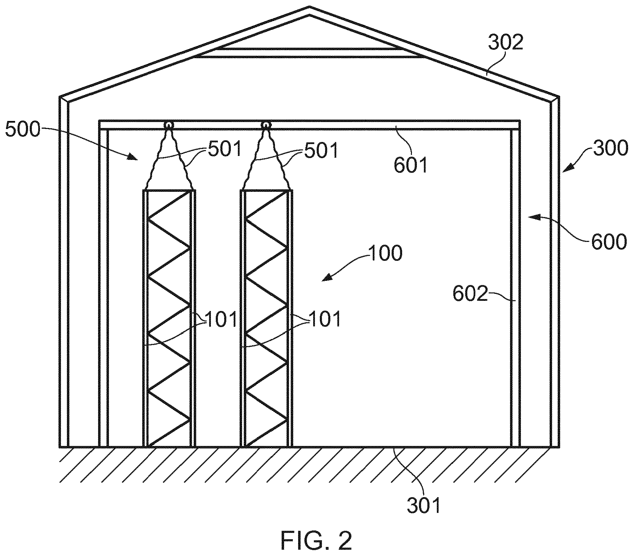

Figure 2 shows an alternative example of a rack system comprising a rack assembly 100 and an auxiliary rack support system 500 within a warehouse 300. Rack 100 is the same as the rack of figure 1. In this example, the rack support system 500 attaches to a freestanding, load bearing support frame 600. Support frame 600 forms a skeleton frame above the racks 100, comprising a plurality of preferably steel beams 601 suspended above the rack assemblies 100 on legs 602.

In rack support system 500, the leg support cables 501 are attached at one end to legs 101, similarly to leg support cables 201 in figure 1. In contrast to the example of figure 1, the leg support cables 501 attach directly to the support frame 600. Rack support system 500 does not comprise a main support cable; the freestanding support frame 600 provides an equivalent function of supporting the leg support cables. In alternative examples, rack support system 200, including the main support cable 202, may be attached to bars 601 of a freestanding support frame 600, similarly to how support frame 200 is attached to the warehouse beams 303 in figure 1.

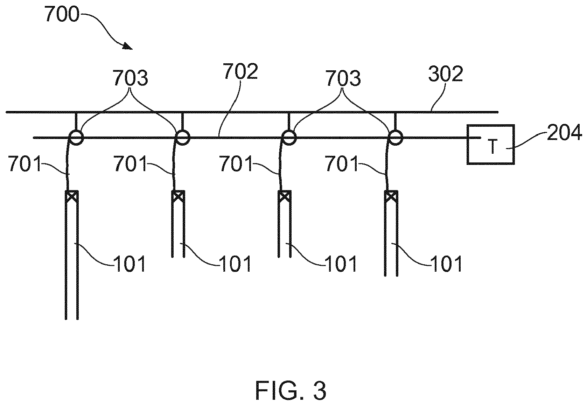

Figure 3 shows an alternative sensor system 700 that may be used with any example rack system described above. Sensor system 700 is similar to sensor system 400, but comprises dedicated sensor cables attached to the racks 100 rather than detecting a force applied to the main support cable 202.

Sensor system 700 comprises a plurality of leg sensor cables 701, each comprising a first end attached to a leg 101 of a rack 100. A second end of each leg sensor cable 701 is attached to a main sensor cable 702. In the illustrated example the main sensor cable 702 is suspended from the roof 302 of the warehouse, but in alternative examples the main sensor cable 702 may be suspended from support beams 302, or a freestanding support frame 600. The main sensor cable 702 is attached to the roof 302 via a plurality of pulley wheels 703, allowing the main sensor cable 702 to move freely in a direction parallel to the roof 302 surface. The main sensor cable 702 is attached to a load sensor 704. In the event of a leg 101 failure, the rack 100 may tip slightly before being held in place by the rack support system 200. Because of this small motion, the relevant leg sensor cable 701 pulls on the main sensor cable 702, which in turn imparts a force on the load sensor 704. If the load sensor 704 detects a force on the main sensor cable 702, the sensor system 700 determines that a leg 101 has failed. Similarly to sensor system 400, a single main sensor cable 702 may be connected to a plurality of racks 100 arranged in a row, via leg sensor cables 701. The sensor system 700 may activate an alarm when a leg failure is detected, for example an audible alarm or a visual alarm such as a flashing beacon. The alarm may be associated with a particular row of racks 100, identifying that the leg failure occurred within that row.

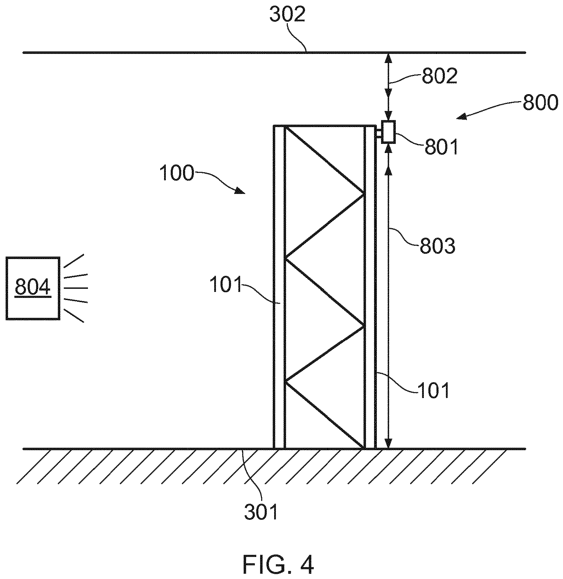

Figure 4 shows a further alternative sensor system 800. Sensor system 800 comprises a distance sensor such as a laser-based measurement module 801 attached to a rack 100. The laser module 801 emits laser beams 802, 803 in a first and second direction, for example vertically up and vertically down (relative to the vertical legs 101). The first direction may be directed towards the roof 302 of the warehouse 300. The second direction may be directed towards the floor 301 of the warehouse 300. The laser module may be an infra-red module, and the emitted laser beams may be infra-red beams. Laser module 801 comprises a laser detector, for receiving reflected laser light. The emitted beams 802, 803 reflect off the roof 302 and floor 301 respectively, and are detected by the detector. The module 801 calculates the distance from the module 801 to the roof 302 by triangulation or by from the time taken for laser beam 802 to travel to the roof 302 and back. The module 801 similarly calculates the distance from the module 801 to the floor 302. The module 801 re-measures the distances continuously, or periodically, for example once every 30 seconds or once every minute or once every five minutes. The module 801 may transmit the distance measurements to a remote control module 804, for example using wireless communications.

If a leg 101 of rack 100 fails, the rack 100 will begin to tip. As the distance measurement module 801 is attached to the rack, it will also tip, altering the distances between the module 801 and the roof 302 and floor 301. The change in the distances will be detected when the module 801 next measures the distance to the floor 801 and roof 802. The measured distances may be transmitted to a remote control module, which may determine that the distances have changed. Alternatively the module 801 may determine that the distances have changed, and may transmit a signal to a remote control module 804 indicating that the distances have changed. The remote control module 804 determines that a leg on the rack 100 to which module 801 is attached has failed, and may initiate an alarm to alert warehouse operators. The alarm may indicate the specific rack 100 that has failed.

In alternative embodiments, the module 801 may only direct a light beam in a single direction, for example towards the roof 302, and determine that a leg 101 has failed if the distance between the laser module 801 and that single point has changed. However, using two beams as described above may provide increased accuracy.

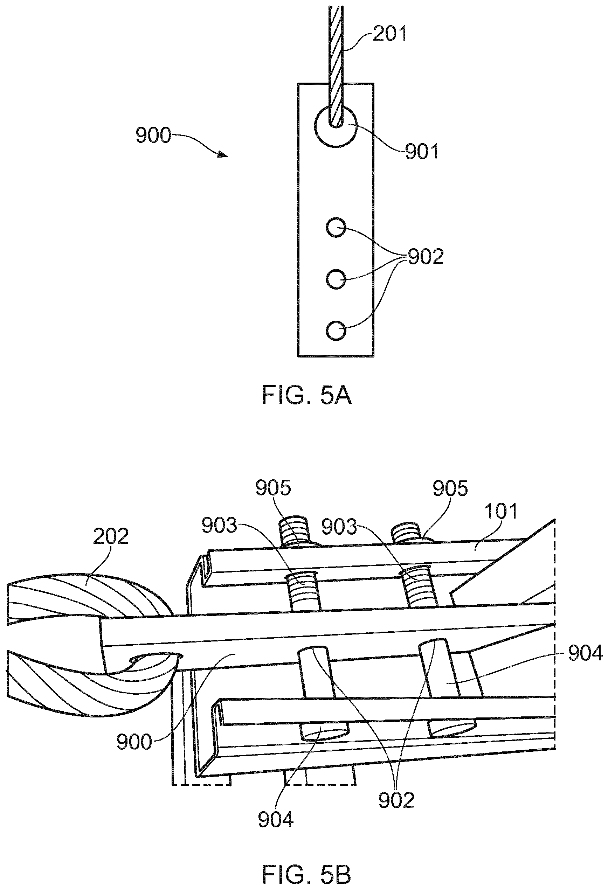

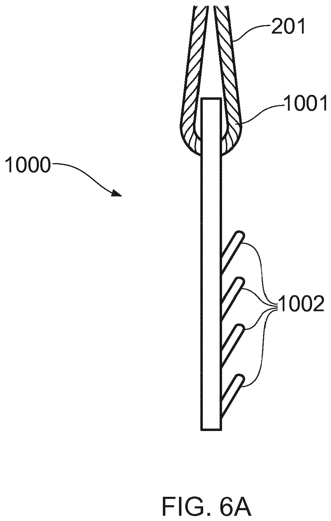

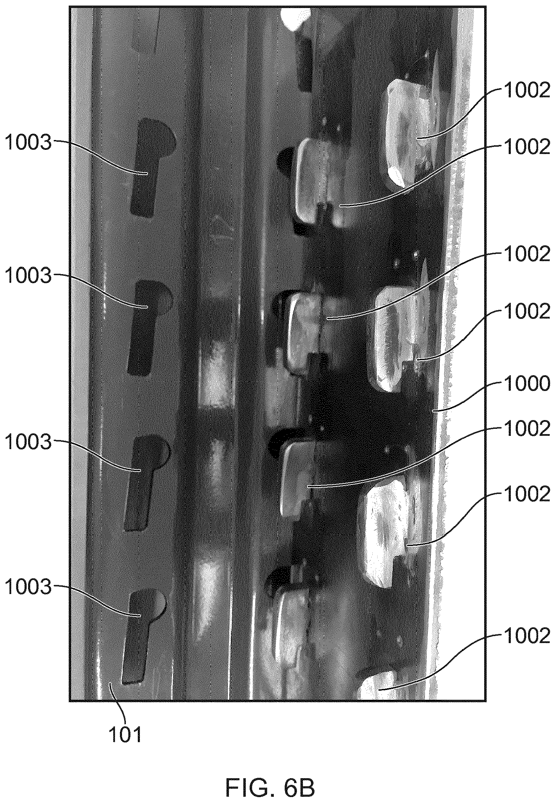

Figures 5 and 6 show examples of attachment plates 900 and 1000 that may be used to attach a leg support cable 201 (or equivalently leg support cable 501) to a leg 101 of a rack 100. The plates 900, 1000 may be steel plates.

Attachment plate 900 shown in figure 5A comprises a hole 901 for attaching the end of the leg support cable 201. The leg support cable 201 is looped through the hole 901, and fastened to itself, securing the attachment plate 900 to the leg support cable 201. The attachment plate 900 further comprises a plurality of bolt holes 902. The bolt holes 902 are configured to align with corresponding holes 903 on the legs 101. Figure 5B shows attachment plate 900 attached to a leg 101. The attachment plate 900 may be attached to a leg 101 by passing bolts 904 through one or more of the bolt holes 902, and through corresponding holes 903 on the leg 101, and securing the bolts 904 with nuts 905.

Figure 6A shows an alternative attachment plate 1000 (shown facing sidewards). Figure 6B shows an attachment plate 1000 adjacent to a leg 101 of a rack 100. Attachment plate 1000 comprises a hole 1001, similar to hole 901, through which the leg support cable 201 may be looped. The attachment plate 1000 further comprises pre-pressed hooks 1002. The hooks 1002 are shaped to slot into corresponding holes 1003 on the legs 101, and to hook onto the legs to attach the plate 1000 to the leg 101. As shown in figure 6B, the plate 1000 may comprise two columns of hooks 1004, and the leg 101 may comprise corresponding columns of holes.

The attachment plates 900, 1000 ensure a strong attachment between the rack 100 and the rack support system 200, allowing the rack support system 200 to support the weight of the rack 100 in the event of a failure of a leg 101.

Other embodiments are intentionally within the scope of the invention as defined by the appended claims.

## Claims

1. A warehouse rack system comprising:
a floor-mounted rack assembly (100) comprising a plurality of vertical legs (101) supporting a plurality of shelves (102); and
an auxiliary rack support system (200) comprising a plurality of leg support cables (201), each leg support cable having a first end attached to a load bearing structure (303) above the rack assembly (100) and a second end attached to one of the plurality of vertical legs (101);
**characterized in that** the plurality of leg support cables (201) is configured to bear the weight of the rack assembly (100) only in the event of structural failure of one or more of the vertical legs (101),
wherein the second end of each leg support cable (201) is attached such that the leg support cable (201) is slack in normal use.

2. The warehouse rack system of claim 1, wherein the auxiliary rack support system (200) comprises a main support cable (202) suspended from the load bearing structure (303), wherein the first end of each leg support cable (201) is attached to the main support cable (202).

3. The warehouse rack system of claim 1, wherein the rack support system comprises a sensor system (400) configured to determine whether one of the vertical legs (101) of the rack assembly (100) has failed.

4. The warehouse rack system of claim 3, wherein the sensor system (400) is configured to determine if one of the vertical legs (101) has failed by detecting an increase in tension applied to any one of the leg support cables (201).

5. The warehouse rack system of claim 4, wherein the sensor system (400) comprises a load sensor (401) arranged to detect a tension in one or more of the leg support cables (201).

6. The warehouse rack system of claim 5, wherein the sensor system (700) further comprises a sensor cable (702) attached to a plurality of the vertical legs, wherein the load sensor (704) is configured to detect a tension in the sensor cable (702).

7. The warehouse rack system of claim 3, wherein the sensor system (800) comprises a sensor (801) arranged to measure a distance between one of the vertical legs and a fixed point relative to the rack assembly (100), the sensor system (800) configured to provide a notification in the event that the distance changes by more than a predetermined amount.

8. The warehouse rack system of claim 7 wherein the sensor (801) is configured to measure the distance using reflection of a light beam from the fixed point.

9. The warehouse rack system of any of claims 3 to 8, wherein the sensor system (400, 800) comprises an alarm arranged to be activated if the sensor system determines that one of the legs of the rack assembly has failed.

10. The warehouse rack system of any preceding claim, wherein the auxiliary rack support system (200) further comprises a plurality of attachment plates (900), wherein the second end of each of the plurality of leg support cables (201) is fastened to a respective one of the plurality of attachment plates (900), and wherein each attachment plate (900) is attached to a respective leg (101) of the rack assembly (100).

11. The warehouse rack system of claim 10, wherein the attachment plates (900, 1000) are bolted onto respective legs (101) of the rack assembly (100) or each comprise a hook (1002) received in a corresponding hole (1003) on a leg (101) of the rack assembly (100) to attach each attachment plate (1000) to the leg (101).

12. The warehouse rack system of any preceding claim, wherein the load bearing structure is a roof (302) of a warehouse (300) housing the rack system or a support frame (600) around the rack assembly (100).

13. A kit of parts for an auxiliary rack support system (200) for a floor-mounted rack assembly (100), the kit of parts is **characterized in that** it comprises:
a plurality of leg support cables (201), each leg support cable having a first end attachable to a load bearing structure and a second end attachable to one of a plurality of vertical legs (101) of the rack assembly (100); and
a sensor system (400) configured to determine whether one of the legs (101) of the rack assembly (100) has failed,
wherein the leg support cables (201) are configured to bear the weight of the rack assembly (200) in the event of structural failure of one of the vertical legs (101),
and wherein the sensor system (400) is configured to determine if one of the vertical legs (101) has failed by detecting an increase in tension applied to any one of the leg support cables (201).

14. A method of providing auxiliary support for a warehouse rack system comprising a floor-mounted rack assembly (100) having a plurality of vertical legs (101) supporting a plurality of shelves (102), the method comprising:
attaching a first end of each of a plurality of leg support cables (201) to a respective vertical leg of the rack assembly (100); and
attaching a second end of each of the plurality of leg support cables (201) to a load bearing structure (303),
**characterized in that** the plurality of leg support cables (201) is configured to bear the weight of the rack assembly (100) only in the event of structural failure of one or more of the vertical legs (101),
wherein the second end of each leg support cable (201) is attached such that the leg support cable (201) is slack in normal use.

## Patentansprüche

1. Lagerregalsystem, umfassend:
eine am Boden montierte Regalanordnung (100), die eine Vielzahl von vertikalen Schenkeln (101) umfasst, die eine Vielzahl von Regalfachböden (102) tragen; und
ein Hilfs-Regalträgersystem (200), das eine Vielzahl von Schenkel-Trägerkabeln (201) umfasst, wobei jedes Schenkel-Trägerkabel ein erstes Ende aufweist, das an einer lasttragenden Struktur (303) oberhalb der Regalanordnung (100) befestigt ist, und ein zweites Ende, das an einem der Vielzahl von vertikalen Schenkeln (101) befestigt ist;
**dadurch gekennzeichnet, dass** die Vielzahl von Schenkel-Trägerkabeln (201) so konfiguriert ist, dass sie das Gewicht der Regalanordnung (100) nur im Falle eines Strukturversagens eines oder mehrerer der vertikalen Schenkel (101) tragen,
wobei das zweite Ende jedes Schenkel-Trägerkabels (201) so befestigt ist, dass das Schenkel-Trägerkabel (201) bei normalem Gebrauch schlaff ist.

2. Lagerregalsystem nach Anspruch 1, wobei das Hilfs-Regalträgersystem (200) ein Haupt-Trägerkabel (202) umfasst, das an der tragenden Struktur (303) aufgehängt ist, wobei das erste Ende jedes Schenkel-Trägerkabels (201) an dem Haupt-Trägerkabel (202) befestigt ist.

3. Lagerregalsystem nach Anspruch 1, wobei das Regalträgersystem ein Sensorsystem (400) umfasst, das so konfiguriert ist, dass es feststellt, ob einer der vertikalen Schenkel (101) der Regalanordnung (100) versagt hat.

4. Lagerregalsystem nach Anspruch 3, wobei das Sensorsystem (400) so konfiguriert ist, dass es feststellt, ob einer der vertikalen Schenkel (101) versagt hat, indem es eine Zunahme der Spannung erfasst, die auf eines der Schenkel-Trägerkabel (201) ausgeübt wird.

5. Lagerregalsystem nach Anspruch 4, wobei das Sensorsystem (400) einen Lastsensor (401) umfasst, der so angeordnet ist, dass er eine Spannung in einem oder mehreren der Schenkel-Trägerkabel (201) erfasst.

6. Lagerregalsystem nach Anspruch 5, wobei das Sensorsystem (700) weiter ein Sensorkabel (702) umfasst, das an einer Vielzahl der vertikalen Schenkel befestigt ist, wobei der Lastsensor (704) so konfiguriert ist, dass er eine Spannung in dem Sensorkabel (702) erfasst.

7. Lagerregalsystem nach Anspruch 3, wobei das Sensorsystem (800) einen Sensor (801) umfasst, der so angeordnet ist, dass er einen Abstand zwischen einem der vertikalen Schenkel und einem festen Punkt relativ zu der Regalanordnung (100) misst, wobei das Sensorsystem (800) so konfiguriert ist, dass es eine Benachrichtigung bereitstellt, falls sich der Abstand um mehr als einen vorbestimmten Betrag ändert.

8. Lagerregalsystem nach Anspruch 7, wobei der Sensor (801) so konfiguriert ist, dass er den Abstand unter Verwendung der Reflexion eines Lichtstrahls von dem Festpunkt aus misst.

9. Lagerregalsystem nach einem der Ansprüche 3 bis 8, wobei das Sensorsystem (400, 800) einen Alarm umfasst, der so angeordnet ist, dass er aktiviert wird, wenn das Sensorsystem feststellt, dass einer der Schenkel der Regalanordnung versagt hat.

10. Lagerregalsystem nach einem der vorstehenden Ansprüche, wobei das Hilfs-Regalträgersystem (200) weiter eine Vielzahl von Befestigungsplatten (900) umfasst, wobei das zweite Ende jedes der Vielzahl von Schenkel-Trägerkabeln (201) an einer jeweiligen der Vielzahl von Befestigungsplatten (900) befestigt ist, und wobei jede Befestigungsplatte (900) an einem jeweiligen Schenkel (101) der Regalanordnung (100) befestigt ist.

11. Lagerregalsystem nach Anspruch 10, wobei die Befestigungsplatten (900, 1000) an jeweiligen Schenkeln (101) der Regalanordnung (100) angeschraubt sind oder jeweils einen Haken (1002) umfassen, der in einem entsprechenden Loch (1003) an einem Schenkel (101) der Regalanordnung (100) aufgenommen wird, um jede Befestigungsplatte (1000) an dem Schenkel (101) zu befestigen.

12. Lagerregalsystem nach einem der vorstehenden Ansprüche, wobei die lasttragende Struktur ein Dach (302) eines Lagers (300), das das Regalsystem beherbergt, oder ein Tragrahmen (600) um die Regalanordnung (100) herum ist.

13. Bauteilesatz für ein Hilfs-Regalträgersystem (200) für eine am Boden montierte Regalanordnung (100), wobei der Bauteilesatz **dadurch gekennzeichnet, dass** er Folgendes umfasst:
eine Vielzahl von Schenkel-Trägerkabeln (201), wobei jedes Schenkel-Trägerkabel ein erstes Ende aufweist, das an einer lasttragenden Struktur befestigt werden kann, und ein zweites Ende, das an einem einer Vielzahl von vertikalen Schenkeln (101) der Regalanordnung (100) befestigt werden kann; und
ein Sensorsystem (400), das so konfiguriert ist, dass es feststellt, ob einer der Schenkel (101) der Regalanordnung (100) versagt hat,
wobei die Schenkel-Trägerkabel (201) so konfiguriert sind, dass sie das Gewicht der Regalanordnung (200) nur im Falle eines Strukturversagens eines oder mehrerer der vertikalen Schenkel (101) aufnehmen,
und wobei das Sensorsystem (400) so konfiguriert ist, dass es feststellt, ob einer der vertikalen Schenkel (101) versagt hat, indem es eine Zunahme der Spannung erfasst, die auf eines der Schenkel-Trägerkabel (201) ausgeübt wird.

14. Verfahren zum Bereitstellen eines Hilfsträgers für ein Lagerregalsystem, das eine am Boden montierte Regalanordnung (100) umfasst, die eine Vielzahl von vertikalen Schenkeln (101) aufweist, die eine Vielzahl von Regalfachböden (102) tragen, wobei das Verfahren umfasst:
Befestigen eines ersten Endes von jedem einer Vielzahl von Schenkel-Trägerkabeln (201) an einem entsprechenden vertikalen Schenkel der Regalanordnung (100); und
Befestigen eines zweiten Endes von jedem der Vielzahl von Schenkel-Trägerkabeln (201) an einer lasttragenden Struktur (303),
**dadurch gekennzeichnet, dass** die Vielzahl von Schenkel-Trägerkabeln (201) so konfiguriert ist, dass sie das Gewicht der Lagerregalanordnung (100) nur im Falle eines strukturellen Ausfalls eines oder mehrerer der vertikalen Schenkel (101) tragen,
wobei das zweite Ende jedes Schenkel-Trägerkabels (201) so befestigt ist, dass das Schenkel-Trägerkabel (201) bei normalem Gebrauch schlaff ist.

## Revendications

1. Système de crémaillère d'entrepôt comprenant :
un ensemble de crémaillère monté sur le sol (100) comprenant une pluralité de branches verticales (101) supportant une pluralité d'étagères (102) ; et
un système de support de crémaillère auxiliaire (200) comprenant une pluralité de câbles de support de branche (201), chaque câble de support de branche présentant une première extrémité attachée à une structure de support de charge (303) au-dessus de l'ensemble de crémaillère (100) et une seconde extrémité attachée à une de la pluralité de branches verticales (101) ;
**caractérisé en ce que** la pluralité de câbles de support de branche (201) est configurée pour porter le poids de l'ensemble de crémaillère (100) seulement en cas de défaillance structurelle d'une ou plusieurs des branches verticales (101),
dans lequel la seconde extrémité de chaque câble de support de branche (201) est attachée de sorte que le câble de support de branche (201) soit lâche en utilisation normale.

2. Système de crémaillère d'entrepôt selon la revendication 1, dans lequel le système de support de crémaillère auxiliaire (200) comprend un câble de support principal (202) suspendu à la structure de support de charge (303), dans lequel la première extrémité de chaque câble de support de branche (201) est attachée au câble de support principal (202).

3. Système de crémaillère d'entrepôt selon la revendication 1, dans lequel le système de support de crémaillère comprend un système capteur (400) configuré pour déterminer si une des branches verticales (101) de l'ensemble de crémaillère (100) a failli.

4. Système de crémaillère d'entrepôt selon la revendication 3, dans lequel le système capteur (400) est configuré pour déterminer si une des branches verticales (101) a failli par détection d'une augmentation de tension appliquée à l'un quelconque des câbles de support de branche (201).

5. Système de crémaillère d'entrepôt selon la revendication 4, dans lequel le système de capteur (400) comprend un capteur de charge (401) agencé pour détecter une tension dans un ou plusieurs des câbles de support de branche (201).

6. Système de crémaillère d'entrepôt selon la revendication 5, dans lequel le système capteur (700) comprend en outre un câble de capteur (702) attaché à une pluralité des branches verticales, dans lequel le capteur de charge (704) est configuré pour détecter une tension dans le câble de capteur (702).

7. Système de crémaillère d'entrepôt selon la revendication 3, dans lequel le système capteur (800) comprend un capteur (801) agencé pour mesurer une distance entre une des branches verticales et un point fixé par rapport à l'ensemble de crémaillère (100), le système capteur (800) étant configuré pour fournir une notification au cas où la distance change de plus d'une quantité prédéterminée.

8. Système de crémaillère d'entrepôt selon la revendication 7, dans lequel le capteur (801) est configuré pour mesurer la distance en utilisant la réflexion d'un faisceau de lumière du point fixé.

9. Système de crémaillère d'entrepôt selon l'une quelconque des revendications 3 à 8, dans lequel le système capteur (400, 800) comprend une alarme agencée pour être activée si le système capteur détermine qu'une des branches de l'ensemble de crémaillère a failli.

10. Système de crémaillère d'entrepôt selon l'une quelconque des revendications précédentes, dans lequel le système de support de crémaillère auxiliaire (200) comprend en outre une pluralité de plaques d'attache (900), dans lequel la seconde extrémité de chacun de la pluralité de câbles de support de branche (201) est fixée à une respective de la pluralité de plaques d'attache (900), et dans lequel chaque plaque d'attache (900) est attachée à une branche respective (101) de l'ensemble de crémaillère (100).

11. Système de crémaillère d'entrepôt selon la revendication 10, dans lequel les plaques d'attache (900, 1000) sont boulonnées sur des branches respectives (101) de l'ensemble de crémaillère (100) ou chacune comprend un crochet (1002) reçu dans un trou correspondant (1003) sur une branche (101) de l'ensemble de crémaillère (100) pour attacher chaque plaque d'attache (1000) à la branche (101).

12. Système de crémaillère d'entrepôt selon l'une quelconque des revendications précédentes, dans lequel la structure de support de charge est un toit (302) d'un d'entrepôt (300) logeant le système de crémaillère ou un cadre de support (600) autour de l'ensemble de crémaillère (100).

13. Ensemble de pièces pour un système de support de crémaillère auxiliaire (200) pour un ensemble de crémaillère monté sur le sol (100), l'ensemble de pièces est **caractérisé en ce qu'**il comprend :
une pluralité de câbles de support de branche (201), chaque câble de support de branche présentant une première extrémité pouvant être attachée à une structure de support de charge et une seconde extrémité pouvant être attachée à une d'une pluralité de branches verticales (101) de l'ensemble de crémaillère (100) ; et
un système capteur (400) configuré pour déterminer si une des branches (101) de l'ensemble de crémaillère (100) a failli,
dans lequel les câbles de support de branche (201) sont configurés pour porter le poids de l'ensemble de crémaillère (200) en cas de défaillance structurelle d'une des branches verticales (101),
et dans lequel le système capteur (400) est configuré pour déterminer si une des branches verticales (101) a failli par détection d'une augmentation de tension appliquée à l'un quelconque des câbles de support de branche (201).

14. Procédé de fourniture d'un support auxiliaire pour un système de crémaillère d'entrepôt comprenant un ensemble de crémaillère monté sur le sol (100) présentant une pluralité de branches verticales (101) supportant une pluralité d'étagères (102), le procédé comprenant :
l'attache d'une première extrémité de chacune d'une pluralité de câbles de support de branche (201) à une branche verticale respective de l'ensemble de crémaillère (100) ; et
l'attache d'une seconde extrémité de chacune d'une pluralité de câbles de support de branche (201) à une structure de support de charge (303),
**caractérisé en ce que** la pluralité de câbles de support de branche (201) est configurée pour porter le poids de l'ensemble de crémaillère (100) seulement en cas de défaillance structurelle des une ou plusieurs des branches verticales (101),
dans lequel la seconde extrémité de chaque câble de support de branche (201) est attachée de sorte que le câble de support de branche (201) soit lâche en utilisation normale.
